# EUROPÄISCHE PATENTSCHRIFT

(11) **EP 1 676 789 B1**
(45) Veröffentlichungstag und Bekanntmachung des Hinweises auf die Patenterteilung: **18.06.2008**
(21) Anmeldenummer: 05000016.5
(22) Anmeldetag: 03.01.2005
(51) Int. Cl.: B65D 81/20, A24F 23/00, B29C 45/14

(54) **Behältnis zur Aufnahme von Schüttgut und Verfahren zu dessen Herstellung**
Container for receiving granular goods and method for manufacturing the container
Conteneur pour matières pulvérulentes et procédé de son manufacture

(43) Veröffentlichungstag der Anmeldung: 05.07.2006
(73) Patentinhaber: ARTA PLAST AB, 135 48 Tyresö (SE)
(72) Erfinder: Steg, Henning, 135 50 Tyresö (SE)
(74) Vertreter: Niedmers, Ole

(56) Entgegenhaltungen:
- EP-A- 0 492 052
- DE-A1- 1 923 315
- US-A- 2 880 859
- US-A- 5 045 331
- US-A- 5 509 252
- US-A- 5 647 501
- US-A1- 2004 173 556
- PATENT ABSTRACTS OF JAPAN Bd. 1997, Nr. 04, 30. April 1997 (1997-04-30) & JP 08 337503 A (KONPETSUKUSU:KK), 24. Dezember 1996 (1996-12-24)

## Beschreibung

Die Erfindung betrifft ein Verfahren zum Herstellen eines Behältnisses zur Aufnahme von feuchtigkeitsaufweisendem Schüttgut mit einem das Schüttgut aufnehmenden Unterteil und mit einem das Unterteil verschließbar anordbaren Deckelelement, wobei das Unterteil und/oder das Deckelelement in einer Form mittels Spritzgießen hergestellt werden.

Des weiteren betrifft die Erfindung ein Behältnis zur Aufnahme von feuchtigkeitsaufweisendem Schüttgut mit einem das Schüttgut aufnehmenden Unterteil und mit einem das Unterteil verschließbar anordbaren Deckelelement, wobei das Unterteil und/oder das Deckelelement in einer Form mittels Spritzgießen hergestellt werden.

Derartige Behältnisse sind bekannt. Bspw. werden in derartige Behältnisse feuchte Tabakwaren geschüttet, die in Schweden als Snus bekannt sind. Das Snus wird dabei in ein Unterteil aus Pappe oder Propylen gefüllt und mit einem Propylen-Deckel verschlossen. Als Verschluß zwischen Deckel und Unterteil wird eine Banderole aufgebracht, die gleichzeitig zur Beschriftung der Dose und als Öffnungsnachweisverschluß dient.

Eine Vorrichtung bzw. ein Behältnis zur Aufnahme von feuchtigkeitsaufweisendem Schüttgut ist bekannt (US-A-2004 01 73 556). Der dort beschriebene Behälter, der aus einem mehr oder weniger flüssigkeitsdichten Werkstoff besteht, weist eine Öffnung oder mehrere Öffnungen auf, in die ein Element einsetzbar ist und an dem Ort des Einsetzens den Behälter flüssigkeitsdicht verschließt. Das Element besteht aber aus einem Werkstoff, der Luft in das Behälterinnere eintreten läßt, wohingegen das Element selbst für Flüssigkeit nicht permeabel ist. Das Element selbst schließt die Öffnung des Behälters und wird mit dem Behälter durch Paßsitz, durch Schweißung, Klebung oder Rastung verbunden.

Bekannt ist noch ein weiterer Behälter (US-A-5 045 331), der ebenfalls eine zweigeteilte Behälterkonstruktion aufweist, nämlich ein Unterteil und ein Ober- bzw. Dekkelteil bzw. -element, wobei der Behälter selbst auch wiederum aus flüssigkeitsdichtem Werkstoff besteht. Im Deckelteil ist eine Öffnung ausgebildet, in die ein Element einsetzbar ist, das wiederum so geformt ist und ausgebildet, daß es eine Öffnung im Behälteroberteil bzw. Behälterdeckel flüssigkeitsdicht verschließen kann, wobei aber durch das Element Luft permeieren und somit in das Behälterinnere gelangen kann, wie es im Prinzip auch bei dem obigen, zuerst genannten Dokument der Fall ist.

Nachteilig bei den eingangs genannten Behältnissen, bei denen das Unterteil aus Pappe hergestellt ist, ist, daß das Unterteil aufwendig herzustellen ist, da es aus einem den Boden bildenden Unterteil aus Pappe und einem Seitenwandring aus Pappe besteht, die miteinander mit einem Klebstoff verbunden werden. Des weiteren kann durch die Pappe die Feuchtigkeit des Schüttguts großflächig entweichen, so daß eine schnelle Austrocknung des Schüttguts erfolgen kann, so daß die mögliche Lagerzeit des Produktes stark eingeschränkt ist. Des weiteren sind die Unterteile aus Pappe nässeempfindlich.

Bei den Dosen, die vollständig aus Polypropylen oder einem anderen Kunststoff hergestellt sind, kann das darin befindliche feuchte Schüttgut bedingt durch die nicht vorhandene Möglichkeit, die Feuchtigkeit zu regulieren, seine Eigenschaften verändern. Bei Lebensmitteln und Tabakwaren ist hierbei ganz insbesondere problematisch, daß eine Schimmelbildung im Inneren des Behältnisses erfolgen kann, so daß das Schüttgut nicht mehr genieß- bzw. verzehrbar ist.

Der Erfindung liegt daher die Aufgabe zugrunde, ein Behältnis bzw. ein Verfahren zur Herstellung dieses Behältnisses bereitzustellen, bei dem das Behältnis auf einfache Weise herstellbar ist und gleichzeitig eine Veränderung des Schüttguts bedingt durch das im Inneren des Behältnisses herrschende Klima verhindert wird.

Gelöst wird die Aufgabe hinsichtlich des Verfahrens dadurch, daß das Schüttgut eine Tabakware ist, daß die Form vor der Durchführung des Spritzgießens mit einem diffusionsfähigen Material beaufschlagt wird, und daß das diffusionsfähige Material durch das Spritzgießen mit dem Spritzgießmaterial verbunden wird, derart, daß das Unterteil und/oder das Deckelelement mit wenigstens einem diffusionsfähigem Bereich versehen sind.

Vorteilhaft hierbei ist, daß sich Behältnisse durch das erfindungsgemäße Verfahren einfach herstellen lassen, wobei gleichzeitig eine Regulierung des Klimas im Inneren des Behältnisses möglich wird.

Bei der vorteilhaften Ausführung der Erfindung handelt es sich beim Spritzgießmaterial um Polypropylen (PP). Dieses Material ist ein Spritzgießmaterial, durch welches sich kostengünstig Packungsbehältnisse herstellen lassen. Eine weitere Ausgestaltung der Erfindung sieht vor, daß das diffusionsfähige Element aus einem diffusionsfähigem Material besteht. Der Einsatz eines diffusionsfähigen Materials in dünnwandiger Form, insbesondere in Form einer Folie ermöglicht es, Behältnisse im Spritzgießverfahren herzustellen, bei denen sich diffusionsfähige Bereiche mittels Einsetzen von Folien, der sogenannten Inmold-Technik, realisieren lassen.

Gemäß einer vorteilhaften Ausgestaltung der Erfindung wird das diffusionsfähige Material im Bereich eines Bodenabschnitts des Unterteils angeordnet. Zusätzlich oder alternativ kann des weiteren das diffusionsfähige Material im Bereich eines Abschnitts einer Seitenwand des Unterteils angeordnet sein. Weiterhin zusätzlich oder alternativ kann das diffusionsfähige Material im Bereich der das Deckelelement bildenden Oberfläche angeordnet sein. Durch die Anordnung der diffusionsfähigen Bereiche in den zuvor genannten Abschnitten des Behältnisses läßt sich auf einfache Weise eine Kontrollierbarkeit der Klimaparameter innerhalb des Behältnisses erreichen.

Als diffusionsfähiges Material wird vorzugsweise ein permeabler Stoff verwendet. Bei dem diffusionsfähigen Material handelt es sich bspw. vorteilhaft um Pappe, Textilgewebe, Goretex oder Mikropurfiltermaterial. Bei diesen Materialien handelt es sich um kostengünstige Materialien, die auf einfache Weise eine Diffusionsfähigkeit des Behältnisses bereitstellen können. Eine weitere Lehre der Erfindung sieht vor, daß das diffusionsfähige Material an Materialdichte an 0,1 - 3 mm, besonders bevorzugt 0,7-1 mm aufweist. Hierdurch wird eine optimale Stärke des Diffusionsmaterials erreicht, wobei gleichzeitig die Haltbarkeitseigenschaften gegenüber den nicht diffusionsfähigen Bereichen aus Polypropylen gewährleistet bleiben.

Vorteilhafterweise wird zwischen Unterteil und Deckelelement ein Garantieverschluß zum Verschließen von Dekkelelement und Unterteil angeordnet. Durch den Garantieverschluß wird gewährleistet, daß erkennbar ist, ob das Behältnis geöffnet wurde.

Eine weitere vorteilhafte Lehre der Erfindung sieht vor, daß die Form mit einer beschrifteten Folie beaufschlagt wird. Vorteilhafterweise besteht die beschriftete Folie aus Polypropylen. Durch das Einsetzen einer beschrifteten Folie in die Form läßt sich auf einfache Weise die Beschriftung ohne zusätzlichen Arbeitsschritt bereits während des Spritzgießens auf ein Behältnis aufbringen. Des weiteren sieht eine weitere Lehre der Erfindung vor, daß auch das diffusionsfähige Element bzw. das diffusionsfähige Material selbst beschriftet ist.

Eine weitere Lehre der Erfindung sieht vor, daß der prozentuale Anteil des Diffusionsfähigen Materials an der Behältnisoberfläche abhängig von einer gewünschten Kontrolle der Klimaparameter im Behältnis ist. Vorteilhafterweise handelt es sich bei dem zu kontrollierenden Klimaparameter um die Feuchtigkeit im Inneren des Behältnisses. Auf diese Weise lassen sich Behältnisse schaffen, die es ermöglichen, in Abhängigkeit des Feuchtegrades des Schüttgutes das Behältnis so anzupassen, daß die jeweilige optimale Diffusionsfähigkeit der Behältnisoberfläche erreicht wird.

Hinsichtlich des Behältnisses sieht die Lösung der erfindungsgemäßen Aufgabe vor, daß das Schüttgut eine Tabakware ist, daß das Unterteil und/oder das Deckelelement wenigstens einen Bereich aus diffusionsfähigem Material aufweisen, wobei das diffusionsfähige Material mit dem Spritzgießmaterial verbunden ist.

Bei einem derartigen Behältnis ist es möglich, bedingt durch den Anteil an diffusionsfähigem Material in der Oberfläche, einen regulativen Eingriff in das im Inneren des Behältnis befindlichen Klimas zu nehmen.

Vorteilhafterweise wird als Spritzgießmaterial Polypropylen (PP) eingesetzt. Das diffusionsfähige Material ist vorteilhafterweise im Bodenbereich des Unterteils angeordnet. Alternativ oder zusätzlich kann es auch im Seitenrandbereich des Unterteils oder im Bereich der das Deckelelement bildenden Oberfläche angeordnet sein. Als diffusionsfähiges Material kommt dabei Pappe, Textilgewebe, Goretex oder Mikropurfiltermaterial in Frage. Das diffusionsfähige Material selber liegt dabei in Form einer Folie vor.

Durch das Anordnen der diffusionsfähigen Materialien verteilt über die Oberfläche des Behältnisses ist es möglich, eine optimale Diffusionsfähigkeit de Oberfläche des Behältnisses in Relation zum aufgegebene Schüttgut bereitzustellen. Die dabei verwendeten Materialien als Diffusionsmaterial sind kostengünstig einzusetzen. Des weiteren kann das in Folie vorliegende diffusionsfähige Material beschriftet werden, wodurch gleichzeitig die Beschriftung des Behältnisses realisiert werden kann und somit ein den Verweis auf das in das Behältnis gefüllte Schüttgut bereitgestellt wird. Alternativ oder zusätzlich kann weitere Folie, die bedruckt ist, auf der Oberfläche des Behältnisses angeordnet sein. Bei dieser Folie handelt es sich vorzugsweise um Polypropylen (PP). Besonders bevorzugt wird diese Folie bereits während des Spritzgießens aufgebracht. Die Materialstärke des diffusionsfähigen Materials ist dabei 0,1-3 mm, besonders bevorzugt 0,7-1 mm. Hierdurch wird eine optimale Diffusionsfähigkeit erreicht, wobei gleichzeitig die Festigkeitsanforderungen an die Behältnisseitenwände beibehalten werden.

Vorteilhafterweise ist das Deckelelement mit dem Unterteil über einen Garantieverschluß verschlossen.

Eine weitere Lehre der Erfindung sieht vor, daß der prozentuale Anteil des diffusionsfähigen Materials an der Behältnisoberfläche abhängig von der gewünschten Kontrolle der Klimaparameter im Behältnis ist. Vorteilhafterweise handelt es sich bei dem kontrollierenden Klimaparameter um die Feuchtigkeit im Inneren des Behältnisses. Anschließend wird die Erfindung anhand eines bevorzugten Ausführungsbeispiels mittels Zeichnungen näher erläutert. Dabei zeigen
- Fig. 1: eine Querschnittsdarstellung durch ein Behältnis gem. Stand der Technik,
- Fig. 2: eine Querschnittsansicht einer ersten Ausführungsform eines erfindungsgemäßen Behältnisses,
- Fig. 3: eine Querschnittsdarstellung eines erfindungsgemäßen Behältnisses in einer weiteren Ausführungsform,
- Fig. 4: eine Querschnittsdarstellung einer weiteren Ausführungsform eines erfindungsgemäßen Behältnisses
- Fig. 5: eine Querschnittsansicht eines Ausschnittes einer weiteren alternativen Ausführungsform eines erfindungsgemäßen Behältnisses,
- Fig. 6: eine abschnittsweise Seitenansicht eines erfindungsgemäßen Behältnisses,
- Fig. 7: eine perspektivische Darstellungsform einer Ausführungsform eines erfindungsgemäßen Behältnisses,
- Fig. 8: eine Querschnittsansicht eines Abschnittes eines Deckelelements eines erfindungsgemäßen Behältnisses, und
- Fig. 9: eine Draufsicht auf ein Deckelelement.

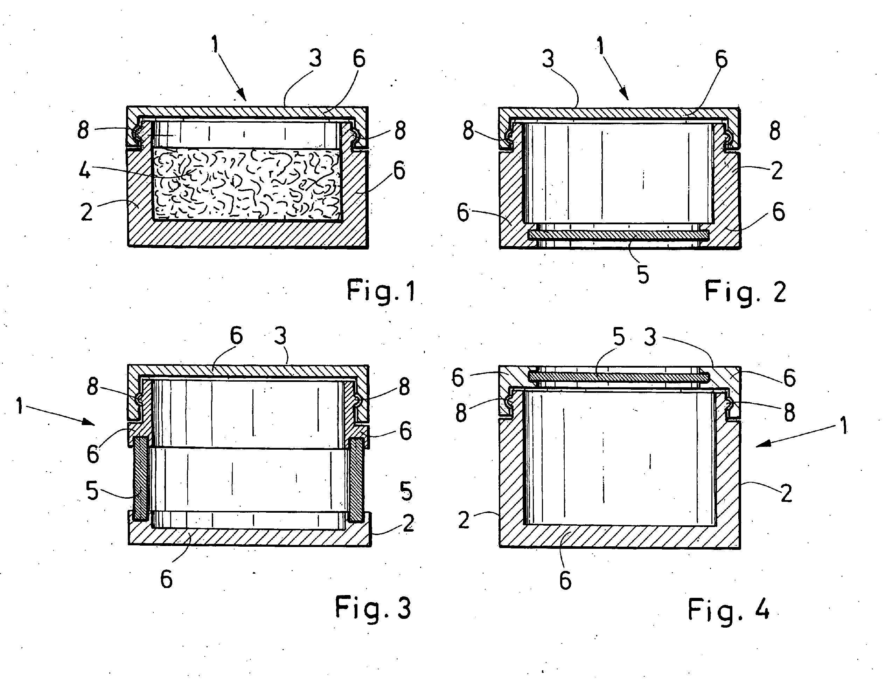

In Fig. 1 ist ein Behältnis gem. des Standes der Technik, hier in Form einer Snus-Dose, dargestellt. Das Behältnis 1 besteht aus einem Unterteil 2 und einem Dekkel 3. Im Unterteil 2 ist ein ein Schüttgut 4, hier bspw. eine Tabakware, eingefüllt. Der Deckel 3 ist auf dem Unterteil 2 aufgesetzt, wobei am Unterteil 2 im Bereich des Aufsatzes des Deckels Deckelverschlußrasten 8 vorgesehen sind. Deckel 3 und Unterteil 2 bestehen hierbei aus Polypropylen 6.

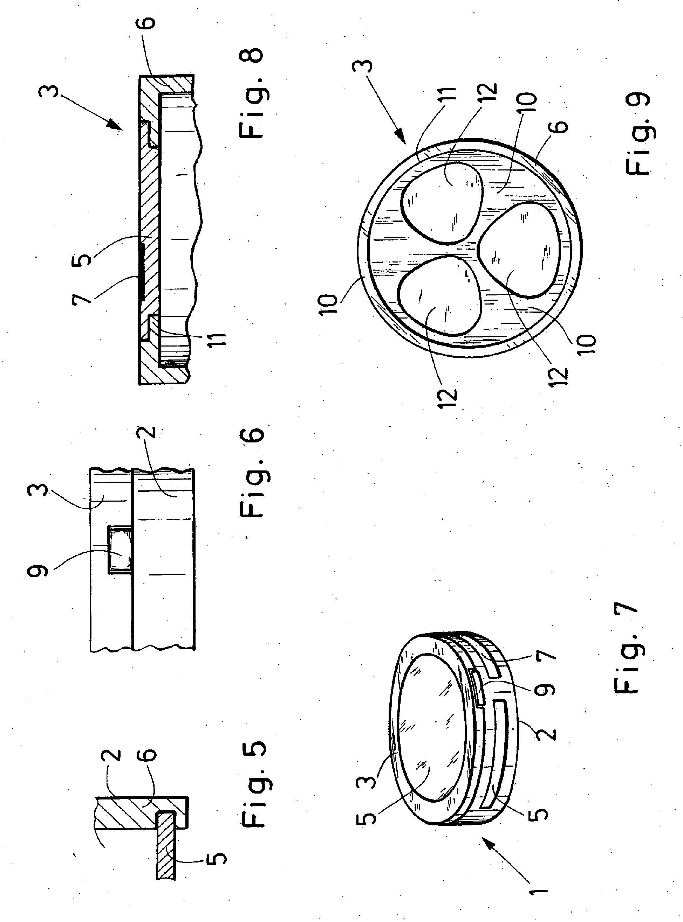

Die Fig. 2 bis 4 zeigen jeweils unterschiedliche Ausführungsformen eines erfindungsgemäßen Behältnisses. Die unterschiedlichen Anordnungen des diffusionsfähigen Materials 5 können dabei auch untereinander kombiniert werden. Fig. 2 ist das diffusionsfähige Material im Bodenbereich des Unterteils 2 angeordnet. In Fig. 3 in den Seitenwänden des Behältnisses und in Fig. 4 im Deckel. Die Ausführungsform gem. Fig. 3 kann dabei unterschiedlich ausgeführt sein. Zum einen kann ein vollständiger Ring aus diffusionsfähigem Material 5 in die Form eingebracht werden, so daß das Unterteil aus zwei unterschiedlichen Abschnitten aus Polypropylen 6 besteht. Alternativ können aber auch nur abschnittsweise Einsätze des Seitenbereiches in diffusionsfähigem Material ausgeführt sein. Bei der Ausführungsform, bei der das diffusionsfähige Material 5 im Polypropylen 6 des Unterteils 2 angeordnet ist, kann gem. Fig. 5 das diffusionsfähige Material als Boden des Behältnisses direkt in die Seitenwand aus Polypropylen eingreifen.

Im Deckel 3 kann ein Garantieverschluß 9 vorgesehen sein, durch den gewährleistet wird, daß es für einen Konsumenten möglich ist, zu sehen, ob der Deckel bereits bspw. vor Erwerb des Behältnisses vom Unterteil getrennt wurde. Bei diesen sog. Garantieverschlüssen handelt es sich um eine einfache und kostengünstige Weise, eine derartige Öffnungskontrolle herbeizuführen.

Fig. 7 zeigt eine Seitenansicht eines erfindungsgemäßen Behältnisses 1 in perspektivischer Darstellung. Hierbei sind sowohl im Deckel 3 als auch im Unterteil 2 Abschnitte aus diffusionsfähigem Material 5 angeordnet. Des weiteren ist das Unterteil 2 mit einer bedruckten Folie 7 aus Polypropylen versehen.

Feuchtigkeit, die im Schüttgut 4 enthalten ist, kann durch die Abschnitte aus diffusionsfähigem Material 5 in Abhängigkeit von der Größe des Materials in Relation zum Polypropylen 6 entweichen. Hierdurch wird es möglich, insbesondere Schimmelbildung im Schüttgut zu vermeiden, wenn bedingt durch weitere klimatische Bedingungen der Feuchtegrad bspw. dazu führen würde, daß Schimmelbildung im Schüttgut stattfinden kann. Auch ein mögliches Austrocknen des Schüttguts wird kontrollierbar.

Die Folien aus diffusionsfähigem Material und auch aus beschriftetem Polypropylen werden in eine Form (nicht dargestellt) während des Herstellungsprozesses des Behältnisses 1 eingelegt. Nach Verschluß der Form wird das Polypropylen 6 durch einen Zugang in die Form mengengenau in erwärmten flüssigem Zustand hineingepreßt und abgekühlt, so daß ein fertiges Behältnis entsteht. Dieses kann sowohl für das Unterteil 2 als auch für das Deckelelement 3 erfolgen. Nach Erstarren des Polypropylen wird die Spritzgußform geöffnet und das fertige Element wird aus der Form ausgestoßen. Anschließend wird die Form erneut mit einer Folie aus diffusionsfähigem Material und u.U. auch mit einer Folie aus beschriftetem Polypropylen beaufschlagt und der Prozeß des Spritzgießens mit Polypropylen wiederholt. Auf diese Weise lassen sich einfach und kostengünstig Behältnisses erzeugen, die einen Austausch des Klimas im Inneren des Behältnisses mit der Umgebung ermöglichen. Dieser Austausch kann dabei kontrolliert erfolgen.

Fig. 8 zeigt eine weitere Ausführungsform eines Teils eines erfindungsgemäßen Behältnisses im Querschnitt. Dabei ist ein Deckelelement 3 ausschnittsweise abgebildet. Das Deckelelement 3 weist in seinem oberen Bereich ein diffusionsfähiges Material 5 auf, auf dem auch bedruckte PP-Folie 7 aufgebracht ist. Das Deckelmaterial, auf welches das diffusionsfähige Material 5 aufgebracht wurde, ist dabei in Polypropylen 6 aufgeführt. Das Deckelelement weist eine Stützstufe 11 im Polypropylenbereich auf. Das diffusionsfähige Material 5 ist dabei als Folie vorliegend und bündig mit dem Polypropylen abschließend ausgeführt. Diese wird durch sog. Inmold-Labeling erreicht.

Fig. 9 zeigt eine Draufsicht auf ein Deckelelement. Dieses Deckelelement weist wiederum Stützstufen 11 und durchlässige Bereiche 12 auf, die von Stabilisierungsstegen 10 umschlossen wird. Die Stabilisierungsstege 10 dienen dazu, das als Folie ausgeführte und mit dem Dekkelelement bündig abschließende diffusionsfähige Material 5 derart zu stabilisieren, daß ein Eindrücken der Folie in den Deckel hinein weitgehend verhindert werden kann. Derartige Stabilisierungsstege sind auch bei seitlich aufgebrachten Folien im Unterteil bzw. bei Bodenfolien im Unterteil 2 möglich.

### Bezugszeichenliste

- 1: Behältnis
- 2: Unterteil
- 3: Deckel
- 4: Schüttgut
- 5: diffusionsfähiges Material
- 6: Polypropylen
- 7: bedruckte PP-Folie
- 8: Deckelverschlußraste
- 9: Garantieverschluß
- 10: Stabilisierungssteg
- 11: Stützstufe
- 12: durchlässiger Bereich

## Patentansprüche

1. Verfahren zum Herstellen eines Behältnisses und dessen Befüllung mit feuchtigkeitsaufweisendem Schüttgut mit einem das Schüttgut aufnehmenden Unterteil und mit einem das Unterteil verschließbar anordbaren Deckelelement, wobei das Unterteil und/oder das Deckelelement in einer Form mittels Spritzgießen hergestellt werden, **dadurch gekennzeichnet, daß** das Schüttgut eine Tabakware ist, daß die Form vor der Durchführung des Spritzgießens mit einem diffusionsfähigen. Material beaufschlagt wird und daß das diffusionsfähige Material durch das Spritzgießen mit einem Spritzgießmaterial verbunden wird, derart, daß das Unterteil und/oder das Deckelelement wenigstens mit einem diffusionsfähigen Bereich versehen sind.

2. Verfahren nach Anspruch 1, **dadurch gekennzeichnet, daß** es sich bei den Spritzgießmaterial um Polypropylen (PP) handelt.

3. Verfahren nach Anspruch 1 oder 2, **dadurch gekennzeichnet, daß** das diffusionsfähige Material im Bereich eines Bodenabschnitts eines Unterteils angeordnet ist.

4. Verfahren nach einem der Ansprüche 1 bis 3, **dadurch gekennzeichnet, daß** das diffusionsfähige Material im Bereich eines Abschnitts einer Seitenwand des Unterteils angeordnet ist.

5. Verfahren nach einem der Ansprüche 1 bis 4, **dadurch gekennzeichnet, daß** das diffusionsfähige Material im Bereich der das Deckelelement bildenden Oberfläche angeordnet ist.

6. Verfahren nach einem der Ansprüche 1 bis 5, **dadurch gekennzeichnet, daß** es sich bei dem diffusionsfähigen Material um ein permeablen Stoff handelt.

7. Verfahren nach einem der Ansprüche 1 bis 6, **dadurch gekennzeichnet, daß** es sich bei dem diffusionsfähigen Material um Textilgewebe handelt.

8. Verfahren nach einem der Ansprüche 1 bis 6, **dadurch gekennzeichnet, daß** es sich bei dem diffusionsfähigen Material um Goretex handelt.

9. Verfahren nach einem der Ansprüche 1 bis 6, **dadurch gekennzeichnet, daß** es sich bei dem diffusionsfähigen Material um Mikropurfiltermaterial handelt.

10. Verfahren nach einem der Ansprüche 1 bis 9, **dadurch gekennzeichnet, daß** es sich bei dem diffusionsfähigen Material eine Folie handelt.

11. Verfahren nach einem der Ansprüche 1 bis 6, **dadurch gekennzeichnet, daß** es sich bei dem diffusionsfähigen Material um Pappe handelt.

12. Verfahren nach einem der Ansprüche 1 bis 11, **dadurch gekennzeichnet, daß** die Form mit einer beschrifteten Folie beaufschlagt wird.

13. Verfahren nach Anspruch 12, **dadurch gekennzeichnet, daß** es sich bei der Folie um eine beschriftete Folie aus Polypropylen handelt.

14. Verfahren nach einem der Ansprüche 1 bis 13, **dadurch gekennzeichnet, daß** das diffusionsfähige Element beschriftet ist.

15. Verfahren nach einem der Ansprüche 1 bis 14, **dadurch gekennzeichnet, daß** das Unterteil und das Deckelelement mit einem Garantieverschluß verschlossen werden.

16. Verfahren nach einem der Ansprüche 12 bis 15, **dadurch gekennzeichnet, daß** das diffusionsfähige Material eine Materialdicke von 0,1 mm bis 3 mm, bevorzugt 0,7 mm bis 1 mm aufweist.

17. Verfahren nach einem der Ansprüche 1 bis 16, **dadurch gekennzeichnet, daß** der prozentuale Anteil des diffusionsfähigen Elements an der Behältnisoberfläche abhängig von einer gewünschten Klimakontrolle im Behältnis ist.

18. Verfahren nach Anspruch 17, **dadurch gekennzeichnet, daß** es sich bei dem zu kontrollierenden Klimaparameter um die Feuchtigkeit im Inneren des Behältnisses handelt.

19. Behältnis enthaltend ein feuchtigkeitsaufweisendes Schüttgut (4), mit einem das Schüttgut (4) aufnehmenden Unterteil (2) und mit einem das Unterteil (2) verschließbar anordbaren Deckelelement (3), wobei das Unterteil (2) und/oder das Deckelelement (3) in einer Form mittels Spritzgießens hergestellt sind, **dadurch gekennzeichnet, daß** das Schüttgut (4) eine Tabakware ist und daß das Unterteil (2) und/oder das Deckelelement (3) wenigstens einen Bereich aus diffusionsfähigem Material (5) aufweisen, wobei das diffusionsfähige Material (5) mit dem Spritzgießmaterial durch das Spritzgießen verbunden ist.

20. Behältnis nach Anspruch 19, **dadurch gekennzeichnet, daß** es sich bei dem Spritzgießmaterial um Polypropylen (PP) handelt.

21. Behältnis nach Anspruch 19 oder 20, **dadurch gekennzeichnet, daß** der diffusionsfähige Bereich im Bodenbereich im Bodenbereich des Unterteils (2) angeordnet ist.

22. Behältnis nach einem der Ansprüche 19 bis 21, **dadurch gekennzeichnet, daß** der diffusionsfähige Bereich im Seitenwandbereich des Unterteils (2) angeordnet ist.

23. Behältnis nach einem der Ansprüche 19 bis 22, **dadurch gekennzeichnet, daß** der diffusionsfähige Bereich im Bereich der das Deckelelement (3) bildenden Oberfläche angeordnet ist.

24. Behältnis nach einem der Ansprüche 19 bis 23, **dadurch gekennzeichnet, daß** das diffusionsfähige Material (5) Textilgewebe ist.

25. Behältnis nach einem der Ansprüche 19 bis 23, **dadurch gekennzeichnet, daß** das diffusionsfähige Material (5) Goretex ist.

26. Behältnis nach einem der Ansprüche 19 bis 23, **dadurch gekennzeichnet, daß** das diffusionsfähige Material (5) Mikropurfiltermaterial ist.

27. Behältnis nach einem der Ansprüche 19 bis 26, **dadurch gekennzeichnet, daß** das diffusionsfähige Material (5) in Form einer Folie vorliegt.

28. Behältnis nach einem der Ansprüche 19 bis 23, **dadurch gekennzeichnet, daß** das diffusionsfähige Material (5) Pappe ist.

29. Behältnis nach einem der Ansprüche 19 bis 28, **dadurch gekennzeichnet, daß** auf mindestens einer Oberfläche des Unterteils (2) und/oder Deckelelements (3) eine beschriftete Folie (7) aufgebracht ist.

30. Behältnis nach Anspruch 29, **dadurch gekennzeichnet, daß** die beschriftete Folie (7) aus Polypropylen (PP) besteht.

31. Behältnis nach einem der Ansprüche 19 bis 30, **dadurch gekennzeichnet, daß** das diffusionsfähige Material (5) beschriftet ist.

32. Behältnis nach einem der Ansprüche 19 bis 31, **dadurch gekennzeichnet, daß** das diffusionsfähige Material (5) eine Materialstärke von 0,1 bis 3 mm, besonders bevorzugt 0,7 bis 1 mm aufweist.

33. Behältnis nach einem der Ansprüche 19 bis 32, **dadurch gekennzeichnet, daß das** Unterteil (2) und das Dekkelelement (3) mit einem Garantieverschluß (9) verschlossen sind.

34. Behältnis nach einem der Ansprüche 19 bis 33, **dadurch gekennzeichnet, daß** der prozentuale Anteil des diffusionsfähigen Materials (5) an der Behältnisoberfläche abhängig von der Kontrolle eines gewünschten Klimaparameters im Behältnis ist.

35. Behältnis nach Anspruch 34, **dadurch gekennzeichnet, daß** es sich bei den kontrollierenden Klimaparameter um die Feuchtigkeit im Inneren des Behältnisses handelt.

## Claims

1. Method of producing a container and filling it with a moisture-containing free-flowing material, with a bottom part for accommodating the free-flowing material and a lid element which can be fitted on the bottom part to enable it to be closed, and the bottom part and/or the lid element are manufactured in a mould by means of an injection moulding process, **characterised in that** the free-flowing material is a tobacco product, a breathable material is placed in the mould prior to running the injection moulding process and the breathable material is joined to an injection moulding material by the injection moulding process so that the bottom part and/or the cover element are provided with at least one breathable region.

2. Method as claimed in claim 1, **characterised in that** the injection moulding material is polypropylene (PP).

3. Method as claimed in claim 1 or 2, **characterised in that** the breathable material is disposed in the region of a base portion of a bottom part.

4. Method as claimed in one of claims 1 to 3, **characterised in that** the breathable material is disposed in the region of a portion of a side wall of the bottom part.

5. Method as claimed in one of claims 1 to 4, **characterised in that** the breathable material is disposed in the region of the surface forming the lid element.

6. Method as claimed in one of claims 1 to 5, **characterised in that** the breathable material is a permeable material.

7. Method as claimed in one of claims 1 to 6, **characterised in that** the breathable material is a woven textile fabric.

8. Method as claimed in one of claims 1 to 6, **characterised in that** the breathable material is Goretex.

9. Method as claimed in one of claims 1 to 6, **characterised in that** the breathable material is Mikropur filter material.

10. Method as claimed in one of claims 1 to 9, **characterised in that** the breathable material is a sheet.

11. Method as claimed in one of claims 1 to 6, **characterised in that** the breathable material is cardboard.

12. Method as claimed in one of claims 1 to 11, **characterised in that** a printed sheet is placed in the mould.

13. Method as claimed in claim 12, **characterised in that** the sheet is a printed sheet of polypropylene.

14. Method as claimed in one of claims 1 to 13, **characterised in that** the breathable element is printed.

15. Method as claimed in one of claims 1 to 14, **characterised in that** the bottom part and the lid element are closed by a guarantee closure.

16. Method as claimed in one of claims 12 to 15, **characterised in that** the breathable material has a material thickness of 0.1 mm to 3 mm, preferably 0.7 mm to 1 mm.

17. Method as claimed in one of claims 1 to 16, **characterised in that** the proportion by percentage of the breathable element relative to the container surface depends on a desired control of the air in the container.

18. Method as claimed in claim 17, **characterised in that** the air parameter to be controlled is the moisture in the interior of the container.

19. Container containing a moisture-containing free-flowing material (4), with a bottom part (2) accommodating the free flowing material (4) and a lid element (3) which can be placed on the bottom part (2) in order to close it, and the bottom part (2) and/or the lid element (3) are manufactured in a mould by an injection moulding process, **characterised in that** the free-flowing material (4) is a tobacco product, and the bottom part (2) and/or the lid element (3) have at least one region of breathable material (5), and the breathable material (5) is joined to the injection moulding material by an injection moulding process.

20. Container as claimed in claim 19, **characterised in that** the injection moulding material is polypropylene (PP).

21. Container as claimed in claim 19 or 20, **characterised in that** the breathable region is disposed in the base region in the bottom area of the bottom part (2).

22. Container as claimed in one of claims 19 to 21, **characterised in that** the breathable region is disposed in the side wall region of the bottom part (2).

23. Container as claimed in one of claims 19 to 22, **characterised in that** the breathable region is disposed in the region of the surface forming the lid element (3).

24. Container as claimed in one of claims 19 to 23, **characterised in that** the breathable material (5) is a woven textile fabric.

25. Container as claimed in one of claims 19 to 23, **characterised in that** the breathable material (5) is Goretex.

26. Container as claimed in one of claims 19 to 23, **characterised in that** the breathable material (5) is Mikropur filter material.

27. Container as claimed in one of claims 19 to 26, **characterised in that** the breathable material (5) is provided in the form of a sheet.

28. Container as claimed in one of claims 19 to 23, **characterised in that** the breathable material (5) is cardboard.

29. Container as claimed in one of claims 19 to 28, **characterised in that** a printed sheet (7) is applied to at least one surface of the bottom part (2) and/or lid element (3).

30. Container as claimed in claim 29, **characterised in that** the printed sheet (7) is made from polypropylene (PP).

31. Container as claimed in one of claims 19 to 30, **characterised in that** the breathable material (5) is printed.

32. Container as claimed in one of claims 19 to 31, **characterised in that** the breathable material has a material thickness of 0.1 to 3 mm, more preferably 0.7 to 1 mm.

33. Container as claimed in one of claims 19 to 32, **characterised in that** the bottom part (2) and the lid element (3) are closed by a guarantee closure (9).

34. Container as claimed in one of claims 19 to 33, **characterised in that** the proportion by percentage of breathable material (5) relative to the container surface is dependent on the control of a desired air parameter in the container.

35. Container as claimed in claim 34, **characterised in that** the air parameter to be controlled is the moisture in the interior of the container.

## Revendications

1. Procédé de fabrication d'un conteneur et de remplissage avec des matières en vrac humides avec une partie inférieure recevant les marchandises en vrac et un couvercle pouvant être disposé de manière à fermer la partie inférieure, la partie inférieure et/ou le couvercle étant fabriqués dans un moule par moulage par injection, **caractérisé en ce que** les marchandises en vrac sont du tabac, **en ce que** le moule est alimenté avec un matériau de diffusion avant l'exécution du moulage par injection, et **en ce que** le matériau de diffusion est relié à un matériau de moulage par injection par le moulage par injection, de sorte que la partie inférieure et/ou le couvercle sont au moins prévus avec une zone de diffusion.

2. Procédé selon la revendication 1, **caractérisé en ce que** le matériau de moulage par injection est du polypropylène (PP).

3. Procédé selon la revendication 1 ou 2, **caractérisé en ce que** le matériau de diffusion est disposé dans la zone d'une section au sol d'une partie inférieure.

4. Procédé selon l'une quelconque des revendications 1 à 3, **caractérisé en ce que** le matériau de diffusion est disposé dans la zone d'une section d'une paroi latérale de la partie inférieure.

5. Procédé selon l'une quelconque des revendications 1 à 4, **caractérisé en ce que** le matériau de diffusion est disposé dans la zone de la surface formant le couvercle.

6. Procédé selon l'une quelconque des revendications 1 à 5, **caractérisé en ce que** le matériau de diffusion est un tissu perméable.

7. Procédé selon l'une quelconque des revendications 1 à 6, **caractérisé en ce que** le matériau de diffusion est un tissu textile.

8. Procédé selon l'une quelconque des revendications 1 à 6, **caractérisé en ce que** le matériau de diffusion est en Goretex.

9. Procédé selon l'une quelconque des revendications 1 à 6, **caractérisé en ce que** le matériau de diffusion est un filtre microporeux.

10. Procédé selon l'une quelconque des revendications 1 à 9, **caractérisé en ce que** le matériau de diffusion est une feuille.

11. Procédé selon l'une quelconque des revendications 1 à 6, **caractérisé en ce que** le matériau de diffusion est du carton.

12. Procédé selon l'une quelconque des revendications 1 à 11, **caractérisé en ce que** le moule est alimenté avec une feuille étiquetée.

13. Procédé selon la revendication 12, **caractérisé en ce que** la feuille est une feuille étiquetée en polypropylène.

14. Procédé selon l'une quelconque des revendications 1 à 13, **caractérisé en ce que** l'élément de diffusion est étiqueté.

15. Procédé selon l'une quelconque des revendications 1 à 14, **caractérisé en ce que** la partie inférieure et le couvercle sont fermés par une fermeture garantie.

16. Procédé selon l'une quelconque des revendications 12 à 15, **caractérisé en ce que** le matériau de diffusion a une épaisseur de 0,1 mm à 3 mm, de préférence de 0,7 mm à 1 mm.

17. Procédé selon l'une quelconque des revendications 1 à 16, **caractérisé en ce que** le pourcentage de l'élément de diffusion à la surface du conteneur dépend du contrôle de climatisation souhaité dans le conteneur.

18. Procédé selon la revendication 17, **caractérisé en ce que** le paramètre de climatisation de contrôle concerne l'humidité à l'intérieur du conteneur.

19. Conteneur contenant des marchandises en vrac (4) humides, avec une partie inférieure (2) comportant les marchandises en vrac (4) et un couvercle (3) pouvant être disposé de manière à fermer la partie inférieure (2), la partie inférieure (2) et/ou le couvercle (3) étant fabriqués dans un moule par moulage par injection, **caractérisé en ce que** les marchandises en vrac (4) sont du tabac et **en ce que** la partie inférieure (2) et/ou le couvercle (3) comportent au moins une zone composée d'un matériau de diffusion (5), le matériau de diffusion (5) étant relié au matériau de moulage par injection par le moulage par injection.

20. Conteneur selon la revendication 19, **caractérisé en ce que** le matériau de moulage par injection est du polypropylène (PP).

21. Conteneur selon la revendication 19 ou 20, **caractérisé en ce que** la zone de diffusion est disposée dans la zone au sol de la partie inférieure (2).

22. Conteneur selon l'une quelconque des revendications 19 à 21, **caractérisé en ce que** la zone de diffusion est disposée dans la zone de la paroi latérale de la partie inférieure (2).

23. Conteneur selon l'une quelconque des revendications 19 à 22, **caractérisé en ce que** la zone de diffusion est disposée dans la zone de la surface formant le couvercle (3).

24. Conteneur selon l'une quelconque des revendications 19 à 23, **caractérisé en ce que** le matériau de diffusion (5) est un tissu textile.

25. Conteneur selon l'une quelconque des revendications 19 à 23, **caractérisé en ce que** le matériau de diffusion (5) est du Goretex.

26. Conteneur selon l'une quelconque des revendications 19 à 23, **caractérisé en ce que** le matériau de diffusion (5) est un filtre microporeux.

27. Conteneur selon l'une quelconque des revendications 19 à 26, **caractérisé en ce que** le matériau de diffusion (5) est présent sous la forme d'une feuille.

28. Conteneur selon l'une quelconque des revendications 19 à 23, **caractérisé en ce que** le matériau de diffusion (5) est du carton.

29. Conteneur selon l'une quelconque des revendications 19 à 28, **caractérisé en ce qu'**une feuille étiquetée (7) est placée sur au moins une surface de la partie inférieure (2) et/ou du couvercle (3).

30. Conteneur selon la revendication 29, **caractérisé en ce que** la feuille étiquetée (7) est en polypropylène (PP).

31. Conteneur selon l'une quelconque des revendications 19 à 30, **caractérisé en ce que** le matériau de diffusion (5) est étiqueté.

32. Conteneur selon l'une quelconque des revendications 19 à 31, **caractérisé en ce que** le matériau de diffusion (5) a une épaisseur de 0,1 mm à 3 mm, de préférence de 0,7 mm à 1 mm.

33. Conteneur selon l'une quelconque des revendications 19 à 32, **caractérisé en ce que** la partie inférieure (2) et le couvercle (3) sont fermés avec un couvercle de garantie (9).

34. Conteneur selon l'une quelconque des revendications 19 à 33, **caractérisé en ce que** le pourcentage du matériau de diffusion (5) à la surface du conteneur dépend du contrôle d'un paramètre de climatisation souhaité dans le conteneur.

35. Conteneur selon la revendication 34, **caractérisé en ce que** le paramètre de climatisation de contrôle concerne l'humidité à l'intérieur du conteneur.
